# EUROPEAN PATENT APPLICATION

(11) **EP 4 675 472 A1**
(43) Date of publication of application: **07.01.2026**
(21) Application number: 24185906.5
(22) Date of filing: 02.07.2024
(51) Int. Cl.: G06F 21/53, G06F 21/64, G06F 21/74

(54) **METHOD AND COMPUTERS SYSTEM TO EXECUTE SAFE CODE**

(71) Applicant: TTTech Auto AG, 1040 Wien (AT)
(72) Inventor: HERNANDEZ, Jonatan Sastre, 1040 Wien (AT); VISCONTI, Emanuele, 1040 Wien (AT); HELPA, Christopher, 1040 Wien (AT); UNHOLD, Christian, 1040 Wien (AT); KARACHATZIS, Paraskevas, 1040 Wien (AT)
(74) Representative: Colaiuda, Antonella

(57) **Abstract**

A Method and a Computer system wherein the computer system comprises a device (DEV), wherein said device includes an unsafe operating system (UnSafOS) configured to execute at a first execution level (EL i), at least a first program (PROG3) configured to execute at a second execution level (EL i-k), and a second program (ModCh) for changing the mode of said at least one processor core (MODE) from unsafe mode (Un-SafMod) to safe mode (SafMod) and from safe mode (SafMod) to unsafe mode (Un-SafMod), said second program (ModCH) is configured to execute on a third execution level (EL i+j) said first program (PROG3) includes safe code (SafCo) and unsafe code (UnSafCo), and said first program (PROG3) executes as process of said unsafe operating system (Un-SafOS) and said first program (PROG3) triggers a change from unsafe mode (Un-SafMod) to safe mode (SafMod) by executing a first command (SZ_Enter) and triggers a change from safe mode (SafMod) to unsafe Mode (UnSafMod) by executing a second command (SZ_Exit).

## Description

### Background of the Invention

The invention relates to a method to execute safe code in an embedded computer system in an embedded computer system where he embedded computer system consists of hardware and software, and the hardware includes one or more processors with one or more processor cores, one or more memories (Memory), and may also include additional other hardware resources, and at least one processor core implements at least three execution levels, and at least one processor core that implements the at least three execution levels also implements a mechanism to switch between at least two modes, including an unsafe mode (UnSafMod) and a safe mode at least one memory is partitioned in safe memory and unsafe memory, and said hardware is configured such that software can access data stored in the safe memory only if the processor core mode is in the safe mode said software of said embedded computer system includes an unsafe operating system configured to execute at a first execution level, at least a first program configured to execute at a second execution level, and a second program for changing the mode of said at least one processor core from unsafe mode to safe mode and from safe mode to unsafe mode, said second program is configured to execute on a third execution level.

Furthermore the invention relates to a computer system.

In particular, the invention relates to an embedded computer system for safety-critical use cases which are use cases where the malfunction of the embedded computer system poses a risk to human life. Such safety-critical use cases are for example use cases in the following domains: automotive (e.g., steer/break/drive-by-wire use cases, advanced driver assistance use cases, automated driving use cases), aerospace, space, robotics, mobile machines (e.g., duty vehicles, agriculture vehicles,), etc. As risk mitigation the quality of the embedded computer system must be adequate. Therefore, different industries have developed different standards that recommend development practices of hardware and software of the embedded computer system. Example standards are the ISO 26262 in the automotive domain and the IEC 61508 in the mobile machine's domain. Typically, the higher the risk of a malfunction to life the more rigorous the recommended practices are. For example, the ISO 26262 classifies the automotive use cases into five categories: QM (Quality Managed), ASIL A, ASIL B, ASIL C, ASIL D, where ASIL stands for Automotive Safety Integrity Levels. A malfunction of a QM-classified use case poses no risk to life while a malfunction of an ASIL D use case has the highest risk to life. Thus, the higher the ASIL of a use case (ASIL A being lowest, ASIL D being highest), the more (or more stringent) the recommended practices will be and, thus, also the development cost of hardware and software grow with the ASIL classification of a use case. However, although a use case may have a given ASIL, not all hardware and software that make up the embedded computer system have to follow the recommended practices for the given ASIL. It is engineering skill to find combinations of hardware and software components at adequate quality levels that, once said hardware and software components are integrated, together the embedded computer system provides the required quality level of the use case. This is in particular the case when an embedded computer system implements multiple use cases with different quality (e.g., different ASIL).

We call software that is developed according to ISO 26262 ASIL recommendations (or quality level according to other industry standards, like Standard Integrity Levels - SIL - in IEC 61508), "Safe Code" SafCo. For example, in the automotive domain software that controls the breaks of a car would typically be SafCo. We call software that is not developed according to an ASIL (or analogous levels in other domains, like SIL in ISO 61508) "Unsafe Code", UnSafCo. For example, in the automotive domain software of the Infotainment system will typically be UnSafCo.

Furthermore, an operating system OS itself is software and we call an operating system that is not developed according to an ASIL (or analogous levels in other domains, like SIL in ISO 61508) an "Unsafe Operating System" UnSafOS. Linux is typically an example of an unsafe operating system UnSafOS. We call an operating system OS that is developed according to an ASIL (or analogous levels in other domains, like SIL in ISO 61508) a "Safe Operating System" SafOS. QNX is an example of a Safe Operating System, SafOS.

### Summary of the Invention

It is an objective of the invention to reduce the necessary amount of SafCo and to simplify the architecture of a computer system which aims to deploy safe and unsafe applications, by deploying only a single operating system, instead of having an unsafe operating system for unsafe code and a safe operating system for safe code and thereby reducing the embedded computer system cost.

This object is achieved by a method as mentioned above, wherein said first program includes safe code and unsafe code, and
said first program executes as process of said unsafe operating system, and
said first program triggers a change from unsafe mode to safe mode by executing a first command and triggers a change from safe mode to unsafe Mode by executing a second command, and said one or many processor cores that support the at least three execution levels and support the at least said two modes react to the execution of said first command and said second command by switching the execution level from the second execution level to the third execution level and by starting execution said second program to change the mode of said at least one or many processor cores, and
said one or many processor cores that support the at least three Execution Levels (EL) and support at least said two modes react to all execution attempts of said unsafe operating system by switching the Execution Level from the second execution level to the third execution level and by starting execution of said program to change the mode of said at least one or many processor cores.

The invention discloses a novel approach to execute "programs" PROG that consist of Unsafe Code UnSafCo and Safe Code SafCo in the same "process" of an Unsafe Operating System UnSafOS while still guaranteeing the integrity of the computation of the Safe Code SafCo of said process. The integrity of said computation is ensured by leveraging hardware mechanisms available in modern processors. In this invention we call said hardware mechanisms the mode mechanism MODE. An example of said hardware mechanism MODE is "arm TrustZone". MODE distinguishes two modes of a processor core an Unsafe Mode UnSafMod and a Safe Mode SafMod. In the example of arm TrustZone UnSafMod is realized by the "non-secure state" of the processor core, while the SafMod is realized by the "secure state" of the processor core. A simple realization of the hardware MODE mechanism may only use a single bit to encode the MODE of a processor state. E.g., processor core state may be UnSafMod if the bit is set to 0 and SafMod if the bit is set to 1. In a realization the bit may only be changed by a program that executes in the highest Execution Level. Another realization of the hardware MODE mechanism may use more complicated data structures. In case a processor implements multiple cores, the different cores may reside in different MODEs.

The state-of-the-art of TrustZone usage is discussed for example in Pinto & Santos [PIN19]. In contrast to our invention, in the state-of-the-art Safe Code SafCo always forms a program on its own and, thus, executes as a dedicated process. Furthermore, in the state-of-the-art the SafCo process is never a process of an unsafe operating system UnSafOS. On the contrary, it will be typically realized as a process of a safe operating system SafOS.

Advantageous embodiments of the method and of the embedded computer system described above are detailed hereinafter:
If said hardware comprises said additional other hardware resources it is advantageous that at least one of said additional other hardware resources is partitioned into safe hardware resources and unsafe hardware resources.

According to a preferred embodiment an execution level mechanism is realized by "Privilege Levels" according to ARM version 7 technology, "Exception Levels" according to ARM version 8 technology, or "Privilege Rings" according to INTEL x86 technology.

Preferably the unsafe operating system is any version of Linux, Windows, Android, or iOS.

According to an embodiment said safe code of said first program uses data from the unsafe memory at least as part of its input, where said data is protected by a checksum stored together with said data in the unsafe memory.

Advantageously said safe code of said first program stores at least parts of its output in the unsafe memory, and said safe code also calculates a checksum and stores said checksum together with said data in the unsafe memory.

According to a further embodiment of the invention said second program before the first execution of said safe code from said first program loads said safe code together with a checksum from the unsafe memory and said second program calculates said checksum of said safe code and compares if the result of said calculation corresponds to said loaded checksum and only in the case of correspondence stores said safe code in the safe memory and in any other case triggers an error routing.

The above-mentioned object can also be solved with a computer system of the type mentioned at the beginning according to the invention in that it is configured to execute the method according to any one of the claims 1 to 7.

Preferably the computer system comprises a device which is connected to a monitor, wherein the computer system is configured to trigger a safety action in accordance with a signal transmission between said device and said monitor.

According to a preferred embodiment of the invention said device and said monitor execute a so called challenge-response protocol in which said monitor sends a challenge to said device and said safe code of said program in the device uses at least part of said challenge as input for a calculation and said safe code stores the output of said calculation together with a checksum in the memory and said device sends said output of said calculation together with said checksum as the response to said monitor and said Monitor checks if the response is a correct response to said challenge and the temporal duration between the transmission of the challenge and the reception of said response is below a configured value, and, in case said temporal duration is higher than said configured value or said response is not a correct response to said challenge said monitor triggers the execution of a safety action.

According to a further embodiment of the invention said device is configured to repeatedly send a watchdog signal to said monitor where the minimum temporal duration in between two successive watchdog signal transmissions is configured in said device and in said monitor and if the monitor fails to receive a second watchdog signal within said configured temporal duration after the reception of a first watchdog signal triggers the execution of a safety action.

### Brief Description of the Drawings

In the following, in order to further demonstrate the present invention, illustrative and non-restrictive embodiments are discussed, as shown in the drawings, in which:
Fig. 1 depicts an example state-of-the-art MODE usage.
Fig. 2 depicts another example state-of-the art MODE usage including a hypervisor.
Fig. 3 depicts an example partitioning of the Memory of an embedded computer system.
Fig. 4 depicts an example partitioning of other hardware resources OthHWRes.
Fig. 5 depicts a program PROG3 that consists of Unsafe Code UnSafCo and Safe Code SafCo.
Fig. 6 depicts an example execution of PROG3 with respect to changes of Execution Levels and MODE.
Fig. 6a depicts another example execution of PROG3 with respect to changes of Execution Levels and MODE.
Fig. 7 depicts how SafCo obtains input data for its computation from Unsafe Memory UnSafMem in a safe manner.
Fig. 8 depicts how SafCo stores output data of its computation in a safe manner in Unsafe Memory UnSafMem.
Fig. 9 depicts two examples of external monitoring MON methods for the correct operation of SafCo in a device DEV.
Fig. 10 depicts the communication WSIG from PROG3's SafCo via UnSafMem to the MON.
Fig. 11 depicts how ModCh checks the integrity of SafCo of PROG3.

### Detailed Description of the Invention

Various embodiments are described herein to various apparatuses and methods. Numerous specific details are set forth to provide a thorough understanding of the overall structure, function, manufacture, and use of the embodiments as described in the specification and illustrated in the accompanying drawings. It will be understood by those skilled in the art, however, that the embodiments may be practiced without such specific details. In other instances, well-known operations, components, and elements have not been described in detail so as not to obscure the embodiments described in the specification. Those of ordinary skill in the art will understand that the embodiments described and illustrated herein are non-limiting examples, and thus it can be appreciated that the specific structural and functional details disclosed herein may be representative and do not necessarily limit the scope of the embodiments, the scope of which is defined solely by the claims.

Reference throughout the specification to "various embodiments," "some embodiments," "one embodiment," or "an embodiment," or the like, means that a particular feature, structure, or characteristic described in connection with the embodiment is included in at least one embodiment. Thus, appearances of the phrases "in various embodiments," "in some embodiments," "in one embodiment," or "in an embodiment," or the like, in places throughout the specification are not necessarily all referring to the same embodiment. Furthermore, the particular features, structures, or characteristics may be combined in any suitable manner in one or more embodiments. Thus, the particular features, structures, or characteristics illustrated or described in connection with one embodiment may be combined, in whole or in part, with the features, structures, or characteristics of one or more other embodiments without limitation given that such combination is not illogical or non-functional.

It must be noted that, as used in this specification and the appended claims, the singular forms "a," "an" and "the" include plural referents unless the content clearly dictates otherwise.

The terms "first," "second," and the like in the description and in the claims, if any, are used for distinguishing between similar elements and not necessarily for describing a particular sequential or chronological order. It is to be understood that the terms so used are interchangeable under appropriate circumstances such that the embodiments of the invention described herein are, for example, capable of operation in sequences other than those illustrated or otherwise described herein. Furthermore, the terms "include," "have," and any variations thereof, are intended to cover a non-exclusive inclusion, such that a process, method, article, or apparatus that comprises a list of elements is not necessarily limited to those elements but may include other elements not expressly listed or inherent to such process, method, article, or apparatus.

It is noted that in the differently described embodiments, the same parts are provided with the same reference numbers or the same component designations, wherein the disclosure can be applied to the same or similar parts with the same or similar reference numbers or the same or similar component designations. The position designations in the description, such as top, bottom, side, etc., are related to the directly described and illustrated figure and these position designations can be transferred to other positions for other figures.

All directional references (e.g., "plus", "minus", "upper", "lower", "upward", "downward", "left", "right", "leftward", "rightward", "front", "rear", "top", "bottom", "over", "under", "above", "below", "vertical", "horizontal"," clockwise", and "counterclockwise") are only used for identification purposes to aid the reader's understanding of the present disclosure, and do not create limitations, particularly as to the position, orientation, or use of the any aspect of the disclosure. It is to be understood that the terms so used are interchangeable under appropriate circumstances such that the embodiments of the invention described herein are, for example, capable of operation in other orientations than those illustrated or otherwise described herein.

As used herein, the phrased "configured to," "configured for," and similar phrases indicate that the subject device, apparatus, or system is designed and/or constructed (e.g., through appropriate hardware, software, and/or components) to fulfill one or more specific object purposes, not that the subject device, apparatus, or system is merely capable of performing the object purpose.

Joinder references (e.g., "attached", "coupled", "connected", and the like) are to be construed broadly and may include intermediate members between a connection of elements and relative movement between elements. As such, joinder references do not necessarily infer that two elements are directly connected and in fixed relation to each other. It is intended that all matter contained in the above description or shown in the accompanying drawings shall be interpreted as illustrative only and not limiting. Changes in detail or structure may be made without departing from the spirit of the invention as defined in the appended claims.

Furthermore, it is noted that even if the individual steps of the method are specified in a claim in a certain order, the individual steps of the method do not necessarily have to be carried out in the specified order. In particular, the order of individual steps can be changed if this is technically possible. Several steps may also be carried out simultaneously. Thus, in the present context a method claim comprising several steps is to be understood as meaning that these steps must be present but that the order of the steps may differ and vary from the order stated in the claim.

All numbers expressing measurements and so forth used in the specification and claims are to be understood as being modified in all instances by the term "about."

We discuss some of the many implementations of the invention next. If not stated otherwise, all details described in connection with a specific example are not only valid in connection with this example but apply to the general scope of protection of the invention.

In this document, i, j, and k are natural numbers. Example evaluations of i, j, and k are:
i = 1, j = 2, k = 1
i = 1, j = 1, k = 1

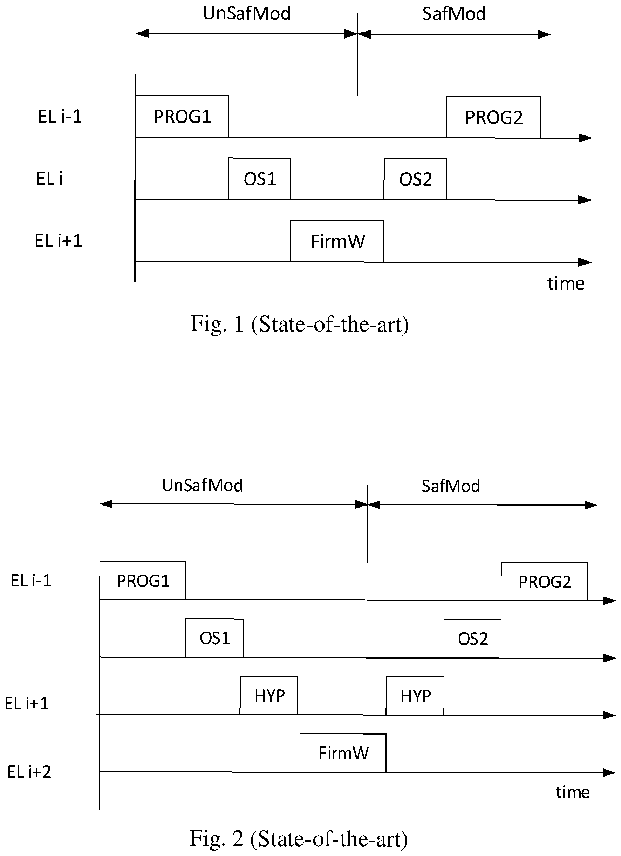

Fig. 1 depicts an example state-of-the-art MODE usage of a single processor core. The figure depicts an idealized diagram in which time progresses from left to right. Our invention requires processor cores that support multiple "Execution Levels" (a state-of-the-art technology generically known as "protection rings" [Wik24] and broadly available in processor cores, e.g., called "Privilege Levels" in ARM version 7 technology, "Exception Levels" in ARM version 8 technology, or "Privilege Rings" in INTEL x86 technology). The processor core will always be only in exactly one Execution Level. In this example we use Execution Levels EL i-1, EL i, and EL i+1. Typically, the higher the Execution Level the more changes to the processor core state and changes to hardware resources are permitted.

In this document a higher integer value of i, j, and k indicates a higher Execution Level. In INTEL Rings opposite applies, the smaller the integer value of i, j, and k, the higher the Execution Level.

In this example, a program PROG1 executes in EL i-1. PROG1 may be a user application and consist of Unsafe Code UnSafCo only. In this example, PROG1 wants to trigger the execution of PROG2 which consists of Safe Code SafCo only. However, PROG1 cannot cause this execution of PROG2 directly but requires the support of the operating system it is running on (OS1) which is an Unsafe Operating System UnSafOS. PROG1 invokes OS1 by executing a particular "instruction". The processor core knows that this instruction requires a change into a different Execution Level (into EL i in this case), it changes into EL i, and, then, executes OS1. In order to execute PROG2 the processor core has to change MODE from UnSafMod to SafMod. Again, this change cannot be done by OS1 directly, but OS 1 requires a firmware FirmW to change MODE. OS1 invokes the firmware FirmW by executing another particular instruction. Again, the processor core reacts to this another particular instruction by changing the Execution Level to EL i+1 and executes the firmware FirmW. FirmW executes in EL i+1 that has adequate permissions and changes MODE from UnSafMod to SafMod. Then FirmW invokes OS2 which is a Safe Operating System SafeOS. Finally, OS2 causes the processor core to change the EL to EL i-1 and to execute PROG2 which contains Safe Code SafCo only.

Fig. 2 depicts another example state-of-the art MODE usage. The scenario is similar to the scenario depicted in Fig. 1 with the additional use of a hypervisor HYP.

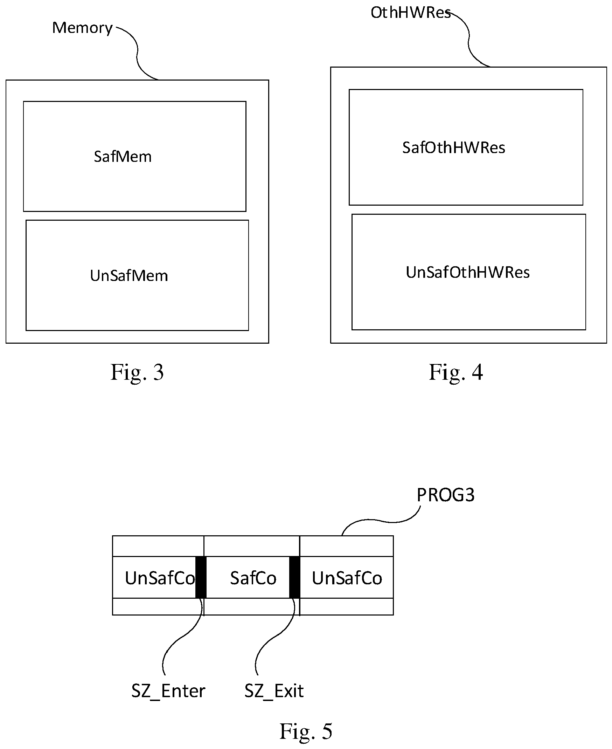

Fig. 3 depicts an example partitioning of the Memory of the embedded computer system. Memory is partitioned into Safe Memory SafMem and Unsafe Memory UnSafMem. UnSafMem is accessible by programs (including the operating system) if the MODE of the processor core is in UnSafMod or SafMod. SafMem is only accessible by programs (including the operating system) if the MODE of the processor core is SafMod.

Fig. 4 depicts an example partitioning of other hardware resources OthHWRes. OthHWRes is partitioned into Safe Other Hardware Resources SafOthHWRes and Unsafe Other Hardware Resources UnSafOthHWRes. UnSafOthHWRes is accessible by programs (including the operating system) if the MODE of the processor core is in UnSafMod or SafMod.

SafOthHWRes is only accessible by programs (including the operating system) if the MODE of the processor core is SafMod.

Fig. 5 depicts a program PROG3 that consists of Unsafe Code UnSafCo and Safe Code SafCo. As depicted, the end of the first UnSafCo consists of an instruction SZ_Enter and the end of the SafCo consists of an instruction SZ_Exit.

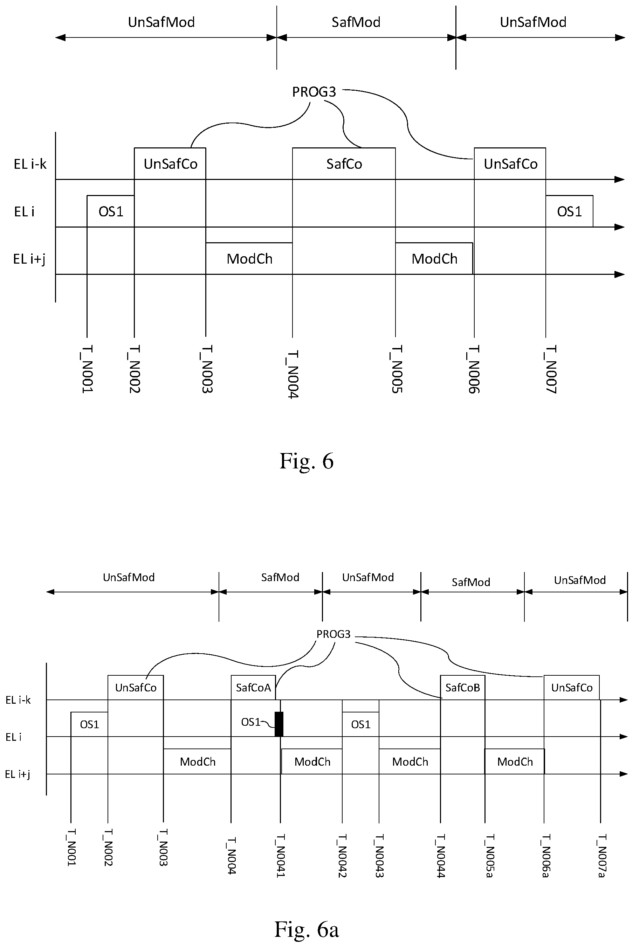

Fig. 6 depicts an example execution of PROG3 with respect to changes of Execution Levels and MODE.
- The scenario starts at T_N001 when OS1 executes at EL i. OS1 is an UnSafOS, for example Linux.
- At T_N002, OS1 causes a change into EL i-k and triggers the execution of the first UnSafCo part of PROG3.
- At T_N003, the first part of UnSafCo of PROG3 completes by executing SZ_Enter. SZ_Enter causes the processor core to change from EL i-k to EL i+j and to execute the mode change program ModCh.
   ∘ The target EL which a processor core selects as a reaction to an instruction can be configured, e.g., in a so called "Exception Vector Table". Thus, per invention the processor core is configured to "bypass" the execution level EL i of the operating system OS1 upon SZ_Enter and, thus, to directly enter EL i+j.
   ∘ ModCh can be for example implemented in Firmware, FirmW, or in a Hypervisor, HYP.
- Between T_N003 and T_N004, ModCh changes MODE from UnSafMod to SafMod. While SafMod the processor core is configured that all attempts to change the EL by any PROG on any EL < EL i+j causes a change of EL into EL i+j.
- At T_N004, ModCh causes a change from EL i+j to EL i-k and the SafCo part of PROG3 starts executing.
- Between T_N004 and T_N005, SafCo of PROG3 executes. In Fig. 6 there is no PROG that attempts to change the EL (a scenario discussing such an attempt is depicted in Fig. 6a).
- At T_N005, SafCo of PROG3 completes execution with SZ_EXIT, which causes a change from EL i-k to EL i+j and ModCh to execute.
- Between T_N005 and T_N006, ModCh changes MODE from SafMod to UnSafMod.
- At T_N006, ModCh changes EL from EL i+j to EL i-k and causes the second part of UnSafCo to execute.
- At T_N007, the execution of PROG3 completes and OS1 is invoked.

Fig. 6a depicts another example execution of PROG3 with respect to changes of Execution Levels and MODE. This example is identical to the scenario depicted in Fig. 6 until T_N0004. However, before the SafCo part of PROG3 completes, OS1 attempts to execute at T_N0041. Thus, only a part of SafCo, SafCoA, has been executed. This attempt of OS1 is detected by the processor core which changes EL to EL i+j and executes ModCh to change the MODE from SafMod to UnSafMod between T_N0041 and T_N0042. At T_N0042, ModCh causes a change to EL i and OS1 executes. At T_N0043 the OS1 execution causes a change to EL i+j and the execution of ModCh. Again, ModCh changes the MODE from UnSafMod to SafMod between T_N0043 and T_N0044. At T_N0044, ModCh causes a change to EL i-k and the execution of the remaining part of SafCo, SafCoB. From then on, the scenario continues analog to the scenario depicted in Fig. 6. SafCo can include dedicated code that is executed in case of an interruption. Said dedicated code can be executed as part of SafCoA, SafCoB, or both.

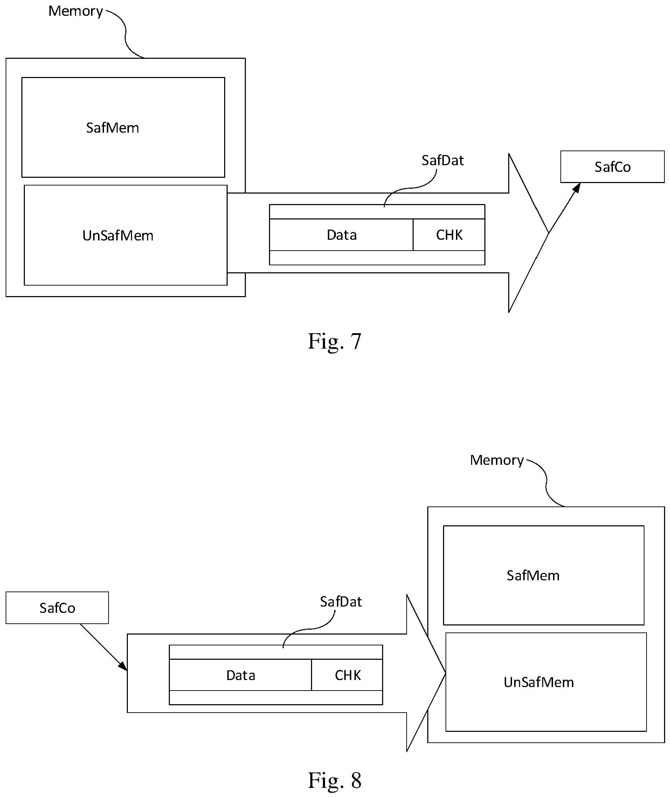

Fig. 7 depicts how SafCo obtains input data for its computation from Unsafe Memory UnSafMem in a safe manner. The integrity of the Data is protected by a checksum CHK. Thus, Data together with its checksum CHK is Safe Data, SafDat. After obtaining SafDat from UnSafMem, SafCo calculates the checksum and compares the result to CHK. SafCo will use Data of SafeData only if SafCo's checksum calculation corresponds to the stored CHK and discard Data otherwise. Checksums can be for example CRC (cyclic redundancy checks) as specified in [AUT20]. The type of checksum calculation is chosen with sufficiently low probability of a program containing Unsafe Code UnSafCo, in particular an Unsafe Operating System UnSafOS, to generate a correct CHK for Data.

Fig. 8 depicts how SafCo stores output data of its computation in a safe manner in Unsafe Memory UnSafMem. The integrity of the Data is protected by a checksum CHK. Thus, Data together with its checksum CHK is Safe Data, SafDat. After SafCo calculates Data, SafeCo also calculates the checksum CHK for said Data. SafCo will then store SafeDat in UnSafMem. Checksums can be for example CRC (cyclic redundancy checks) as specified in [AUT20]. The type of checksum calculation is chosen with sufficiently low probability of a program containing Unsafe Code UnSafCo, in particular an Unsafe Operating System UnSafOS, to generate a correct CHK for Data.

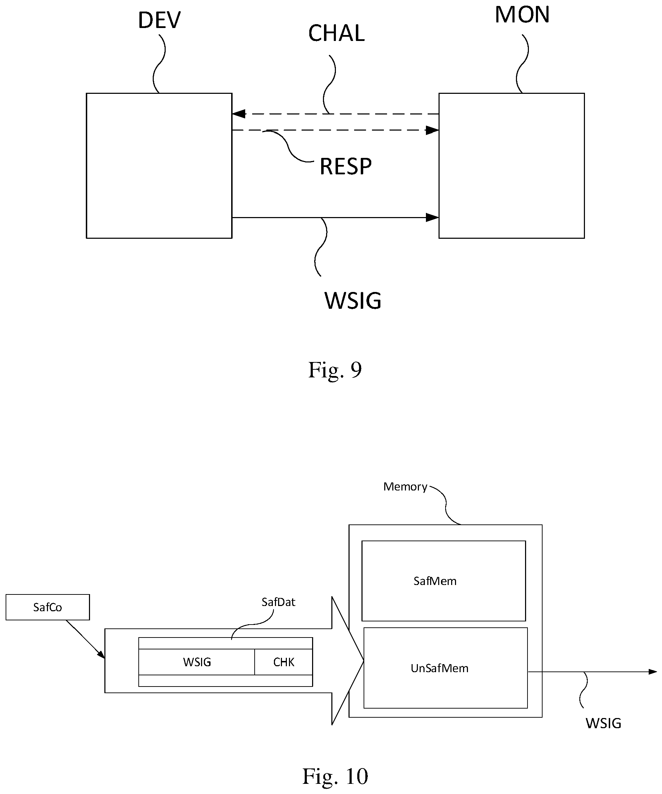

Fig. 9 depicts two examples of external monitoring MON methods for the correct operation of SafCo in a device DEV. The device DEV consist of a subset of hardware resources and software of the embedded computer system. In this example DEV consists of hardware and software needed to execute the scenarios of Fig. 6, Fig. 7, and Fig. 8. MON consists of hardware and optionally software and is developed according to the quality-level of the use case. For example MON could consist of a qualified processor with one processor core, Safe Memory, SafMem, a communication subsystem to DEV, and for software only SafCo programs. The figure depicts two state-of-the-art monitoring methods: a challenge/response protocol and a watchdog.

The challenge/response protocol operates for example as follows:
- To implement the challenge/response protocol, a part of PROG3's Safe Code SafCo is a computation that takes as an input data communicated in a challenge CHAL message from MON to DEV. PROG3's SafCo executes said computation and stores the computation's result as SafDat in UnSafMem. DEV then sends said result in a response RESP message back to MON. MON checks if the data in the RESP message corresponds to the said CHAL message (e.g., by also executing said computation or by a table look-up). Furthermore, MON also measures the temporal distance between the transmission of the CHAL message and the reception of the RESP message. If RESP does not correspond to CHAL or if the temporal duration between CHAL and RESP is too high, then MON classifies SafCo of PROG3 in DEV as faulty and executes a safety action. Otherwise, the challenge response protocol is periodically repeated. A safety action could be for example the activation of a backup system.
The watchdog mechanism operates for example as follows:
- To implement a watchdog mechanism, PROG3's Safe Code SafCo includes a computation of a watchdog signal WSIG. Whenever said part of SafCo is executed PROG3 stores WSIG as Safe Data SafDat in the Memory, e.g., UnSafMem. DEV then sends WSIG to MON. MON implements a watchdog timer that is initialized to configurable value. MON decrements said watchdog timer as real-time progresses. Whenever MON receives WSIG from DEV it checks if the checksum CHK corresponds to the DATA in WSIG and if WSIG is different from a configurable number of previously received WSIG. If it corresponds (and is different from said configurable number of previously received WSIGs) then MON resets its watchdog timer. In the failure-free case, PROG3's SafCo generates and DEV sends WSIG frequently enough to MON, such that MON's watchdog timer does not expire. However, in the failure case, either the WSIG generation or the transmission to MON does not happen in time (for example, when the UnSafOS OS1 interferes too frequently with the execution of PROG3's SafCo). In such a failure case, MON's watchdog timer times out. Consequently MON classifies PROG3's SafCo as faulty and executes a safety action. A safety action could be for example the activation of a backup system.

Fig. 10 depicts the communication WSIG from PROG3's SafCo as SafDat via UnSafMem to MON.

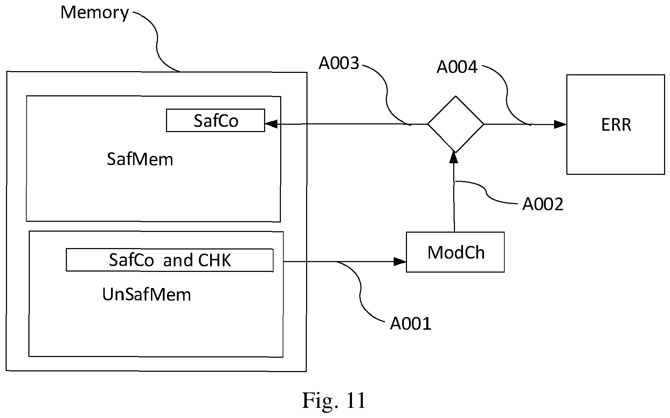

Fig. 11 depicts how ModCh checks the integrity of SafCo of PROG3 before SafCo executes for the first time. For example in the scenario depicted in Fig. 6 SafCo executes the first time at T_N004. In this example
- A001: ModCh reads SafCo and a checksum CHK for SafCo from Unsafe Memory UnSafMem.
- A002: ModCh calculates the checksum for SafCo and checks if the result of said calculation corresponds to the stored CHK.
- A003: If the ModCh calculation of the checksum corresponds to CHK then ModCh stores SafCo in the Safe Memory SafMem. For example, the scenario in Fig. 6 then continues at T_N004 with the execution of SafCo from SafMem.
- A004: If the ModCh calculation of the checksum does not correspond to CHK then SafCo is not stored in Safe Memory SafMem and an Error is raised ERR.

Again, checksums CHK can be for example CRC (cyclic redundancy checks) as specified in [AUT20]. The type of checksum calculation is chosen with sufficiently low probability of a program containing Unsafe Code UnSafCo, in particular an Unsafe Operating System UnSafOS, to generate a correct CHK for Data.

### References

[Wik24] Wikipedia. (2024). "Protection ring". https://en.wikipedia.org/wiki/Protection_ring
[PIN19] Pinto, S., & Santos, N. (2019). Demystifying arm trustzone: A comprehensive survey. ACM computing surveys (CSUR), 51(6), 1-36.
[AUT20] AUTOSAR Consortium. (2020). E2E Protocol Specification. https://www.autosar.org/fileadmin/standards/R20-11/FO/AUTOSAR_PRS_E2EProtocol.pdf

## Claims

1. Method to execute safe code (SafCo) in an embedded computer system where
the embedded computer system consists of hardware and software, and
the hardware includes one or more processors with one or more processor cores, one or more memories (Memory), and may also include additional other hardware resources (OthHWRes), and
at least one processor core implements at least three execution levels (EL), and
at least one processor core that implements the at least three execution levels (EL) also implements a mechanism to switch between at least two modes (MODE), including an unsafe mode (UnSafMod) and a safe mode (SafMod)
at least one memory (Memory) is partitioned in safe memory (SafMem) and unsafe memory (UnSafMem), and
said hardware is configured such that software can access data stored in the safe memory (SafMem) only if the processor core mode (MODE) is in the safe mode (SafMod) said software of said embedded computer system includes an unsafe operating system (UnSafOS) configured to execute at a first execution level (EL i), at least a first program (PROG3) configured to execute at a second execution level (EL i-k), and a second program (ModCh) for changing the mode of said at least one processor core (MODE) from unsafe mode (UnSafMod) to safe mode (SafMod) and from safe mode (SafMod) to unsafe mode (UnSafMod), said second program (ModCH) is configured to execute on a third execution level (EL i+j), **characterized in that**
said first program (PROG3) includes safe code (SafCo) and unsafe code (UnSafCo), and said first program (PROG3) executes as process of said unsafe operating system (UnSafOS), and
said first program (PROG3) triggers a change from unsafe mode (UnSafMod) to safe mode (SafMod) by executing a first command (SZ_Enter) and triggers a change from safe mode (SafMod) to unsafe Mode (UnSafMod) by executing a second command (SZ_Exit), and
said one or many processor cores that support the at least three execution levels (EL) and support the at least said two modes (UnSafMod, SafMod) react to the execution of said first command (SZ_Enter) and said second command (SZ_EXIT) by switching the execution level (EL) from the second execution level (EL i-k) to the third execution level (EL i+j) and by starting execution said second program (ModCh) to change the mode (MODE) of said at least one or many processor cores, and
said one or many processor cores that support the at least three Execution Levels (EL) and support at least said two modes (UnSafMod, SafMod) react to all execution attempts of said unsafe operating system (UnSafOS) by switching the Execution Level (EL) from the second execution level (EL i-k) to the third execution level (EL i+j) and by starting execution of said program to change the mode (MODE) of said at least one or many processor cores.

2. Method according to claim 1, **characterized in that** if said hardware comprises said additional other hardware resources (OthHWRes) at least one of said additional other hardware resources (OthHWRes) is partitioned into safe hardware resources (SafHWRes) and unsafe hardware resources (UnSafHWRes).

3. Method according to claim 1 or 2, **characterized in that** an execution level mechanism is realized by "Privilege Levels" according to ARM version 7 technology, "Exception Levels" according to ARM version 8 technology, or "Privilege Rings" according to INTEL x86 technology.

4. Method according to any preceding claim, **characterized in that** the unsafe operating system (UnSafOS) is any version of Linux, Windows, Android, or iOS.

5. Method according to any preceding claim, **characterized in that** said safe code (SafCod) of said first program (PROG3) uses data (Data) from the unsafe memory (UnSafMem) at least as part of its input, where said data is protected by a checksum (CHK) stored together with said data in the unsafe memory (UnSafMem).

6. Method according to any preceding claim, **characterized in that** said safe code (SafCod) of said first program (PROG3) stores at least parts of its output in the unsafe memory (UnSafMem), and said safe code (SafCod) also calculates a checksum (CHK) and stores said checksum (CHK) together with said data (Data) in the unsafe memory (UnSafMem).

7. Method according to any preceding claim, **characterized in that** said second program (ModCh) before the first execution of said safe code (SafCo) from said first program (PROG3) loads said safe code (SafCo) together with a checksum (CHK) from the unsafe memory (UnSafMem) and said second program (ModCh) calculates said checksum of said safe code (SafCo) and compares if the result of said calculation corresponds to said loaded checksum (CHK) and only in the case of correspondence stores said safe code (SafCo) in the safe memory (SafMem) and in any other case triggers an error routing (ERR).

8. Computer system **characterized in that** the computer system is configured to execute the method according to any one of the claims 1 to 7.

9. Computer system according to claim 8, **characterized in that**, the computer system comprises a device (DEV) which is connected to a monitor (MON), wherein the computer system is configured to trigger a safety action in accordance with a signal transmission between said device (DEV) and said monitor (MON).

10. Computer System according to claim 9, **characterized in that**, said device (DEV) and said monitor (MON) execute a so called challenge-response protocol in which said monitor sends a challenge (CHAL) to said device (DEV) and said safe code (SafCo) of said program (PROG3) in the device (DEV) uses at least part of said challenge (CHAL) as input for a calculation and said safe code (SafCo) stores the output of said calculation together with a checksum (CHK) in the memory (Memory) and said device sends said output of said calculation together with said checksum (CHK) as the response (RESP) to said monitor (MON) and said Monitor (MON) checks if the response (RESP) is a correct response to said challenge (CHAL) and the temporal duration between the transmission of the challenge (CHAL) and the reception of said response (RESP) is below a configured value, and, in case said temporal duration is higher than said configured value or said response (RESP) is not a correct response to said challenge (CHAL) said monitor (MON) triggers the execution of a safety action.

11. Computer system according to claim 9 or 10, **characterized in that** said device (DEV) is configured to repeatedly send a watchdog signal (WSIG) to said monitor (MON) where the minimum temporal duration in between two successive watchdog signal (WSIG) transmissions is configured in said device (DEV) and in said monitor (MON) and if the monitor (MON) fails to receive a second watchdog signal (WSIG) within said configured temporal duration after the reception of a first watchdog signal (WSIG) triggers the execution of a safety action.
